(19)

**Europäisches Patentamt**
**European Patent Office**
**Office européen des brevets**

(11) **EP 4 787 249 A1**

(12) **EUROPEAN PATENT APPLICATION**

(43) Date of publication:
**05.08.2026 Bulletin 2026/32**

(21) Application number: **25155570.2**

(22) Date of filing: **03.02.2025**

(51) International Patent Classification (IPC):
**G06N 10/60** (2022.01)   **G06N 10/20** (2022.01)

(52) Cooperative Patent Classification (CPC):
**G06N 10/20; G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Algorithmiq Oy**
**00160 Helsinki (FI)**

(72) Inventors:
• **LEAHY, Matea**
  **00160 Helsinki (FI)**
• **SOKOLOV, Boris**
  **00160 Helsinki (FI)**
• **GARCIA PÉREZ, Guillermo**
  **00160 Helsinki (FI)**

(74) Representative: **Leinweber & Zimmermann Patentanwalts-PartG mbB**
**European Patent Attorneys**
**Viktualienmarkt 8**
**80331 München (DE)**

(54) **METHOD, SYSTEM,COMPUTER PROGRAM PRODUCT AND DATA CARRIER FOR ESTIMATING A GROUND STATE PROPERTY OF A QUANTUM SYSTEM**

(57)     The present invention is related to a computer-implemented method and a system for estimating a ground state property of a quantum system, to a computer program product and a data carrier.

**Fig. 1**

EP 4 787 249 A1

**Description**

The present invention is related to a computer-implemented method and a system for estimating a ground state property of a quantum system, to a computer program product and a data carrier.

Estimating properties of ground or excited states of a quantum mechanical system described by a quantum mechanical Hamiltonian is an important task in many fields of technology, including the pharmaceutical field or material science. In particular, it is often desired to simulate properties of new drugs or materials before trying to realize these drugs or materials in the laboratory, as the latter may be time and cost consuming.

The simulation of quantum mechanical systems on classical computers is burdened by the exponential growth of the underlying Hilbert space. There exist powerful approximation techniques, like DMRG or tensor network algorithms to address this issue. However, for highly entangled quantum systems as they may appear, e.g., in the pharmaceutical field or quantum chemistry, these methods often fail to simulate the ground or excited state of the quantum system to a desired accuracy with affordable computational resources.

An alternative approach is to simulate the quantum mechanical system of interest by use of a quantum processor. To this end, a quantum circuit may be constructed which, when executed by the quantum processor, applies a sequence of quantum gates to a predetermined initial state of the quantum processor to thereby arrive at a final state which, in theory, is the desired ground or excited state or at least an approximation thereof. One prominent example is the Variational Quantum Eigensolver (VQE) which aims at preparing an approximation of a ground state of a Hamiltonian of interest. The Variational Quantum Eigensolver comprises an iterative routine executed by the quantum processor. Starting from an initial quantum circuit, an input quantum circuit is applied to a predetermined initial state of the quantum processor which results in a final state of the quantum processor. A quantum measurement is applied to the final state to thereby obtain measurement data. A classical computer calculates a value of a figure of merit on the basis of the measurement data and constructs an input quantum circuit for the next iteration on the basis of the quantum circuit of the present iteration and the measurement data until the value of the figure of merit complies with an optimization criterion.

Quantum simulation of ground states using the currently available noisy-intermediate scale quantum computers (NISQ computers) faces the problem of noise which results in

simulated ground quantum states that deviate, sometimes to a large extent, from the desired ground state. Furthermore, approximation techniques like the VQE naturally lead to a final state which is close to, but still different from the desired ground state.

In certain applications, like quantum chemistry or the pharmaceutical field, where a high accuracy of the estimated ground state property is required, the deviation of the simulated ground state from the true ground state of the Hamiltonian is a major obstacle. Therefore, error mitigation techniques have been developed which try to reduce the error of a quantum simulation by classical post-processing. For example, in "Matrix product channel: Variationally optimized quantum tensor network to mitigate and reduce errors for the variational quantum eigensolver" by S. Filippov et. al, arxiv:2212.10225v1, the result of the application of the VQE is classical post-processed using a matrix product channel to thereby obtain a better estimate of the ground state energy of a molecule. The method disclosed in arxiv:2212.10225v1 is based on a variational optimization of the matrix product channel which is intricate as it requires to enforce the condition of trace preservation for the matrix product channel in the optimization routine which is resource-intensive.

Due to these problems in the prior art it is therefore an object of the present invention to provide a ways to estimate a ground state property of a quantum system which is efficient and accurate.

According to a first aspect of the present invention, there is provided a computer-implemented method for estimating a ground state property of a quantum system described by a Hamiltonian, wherein the method comprises determining, by a classical computer, a target estimator of a ground state density operator of the Hamiltonian for estimating the ground state property, wherein the classical computer:

   receives a representation of the Hamiltonian and measurement data obtained by applying a quantum measurement to an auxiliary quantum state of a Hilbert space associated with the Hamiltonian and resulting from a quantum processor;

   determines training and validation estimators of a density operator of the auxiliary quantum state by use of the measurement data;

   determines target parameter values for a linear map of a parametric family of completely positive linear maps defined on a linear operator space associated with the Hamiltonian such that a value of a cost function which is indicative of a value of a trace of a product of the Hamiltonian and an image of the training estimator under the map complies with a predetermined optimization criterion;

   calculates a validation value which is a trace of an image of the validation estimator under an auxiliary target map which is the map of the family of maps with the target parameter values, and identifies a target map as the auxiliary target map divided by a normalization factor which depends on the validation value and is such that a deviation of a trace of an image of the validation estimator under the target map from one complies with a predetermined trace criterion;

determines the target estimator of the ground state density operator as an image of the validation estimator under the target map.

A classical computer performs calculations on the basis of classical bits. The classical computer may be any classical computer known in the art. In particular, the classical computer may comprise a classical processor and a classical memory. The classical processor may comprise a microprocessor or a multiprocessor in one example. The classical memory may comprise a volatile and/or a non-volatile memory in one example. The classical computer may further comprise an input/output unit, a basic input-output system (BIOS), a bus system, etc., but it is not limited to this.

A quantum processor performs calculations on the basis of the laws of quantum mechanics. A quantum processor comprises a plurality of N qudits, which are quantum mechanical d-level systems. The most prominent example is the case of d=2, where the qudit is called a qubit. For example, quantum processors with superconducting qubits, qubits which are ions, atoms or photons are known in the art. In one expedient example, the quantum processor comprises means to apply quantum gates, in particular single- and two-qudit gates, which are physical operations to the qudits. Furthermore, the quantum processor comprises means to apply a quantum measurement. The quantum measurement is a physical operation applied to the qudits.

Within the theory of quantum mechanics, quantum mechanical systems may be described by a Hamiltonian which is a Hermitian operator on the Hilbert space associated with the quantum system. In the present invention, the Hamiltonian is in particular an N-qudit Hamiltonian in one example. In one example, the N-qudit Hamiltonian may be an encoding of a fermionic Hamiltonian, e.g. a Hamiltonian of quantum chemistry, in a qudit system, but the invention is not limited to this. The ground state of the Hamiltonian is completely described by a ground state density operator $\rho_g$ which has a minimal energy, i.e., tr$[\rho_g H]$ is minimal. The method according to the present invention determines a target estimator $\tilde{\rho}_{tar}$ of the ground state density operator. The target estimator allows to estimate an expectation value of any observable of the quantum system.

The ground state property may be any physical property of the ground state, e.g., an energy. The physical property may be associated with a Hermitian operator. When the physical property is the energy of the quantum system, the Hermitian operator is the Hamiltonian describing the quantum system.

The measurement data received by the classical computer is in particular such that it allows to determine an estimator of the density operator of the auxiliary quantum state of the quantum processor. Preferably, the auxiliary quantum state is an entangled quantum state. In particular, the auxiliary quantum state is close to the ground state of the Hamiltonian in one example, as will be further explained below.

Any physical quantum measurement may be described by a Positive Operator Valued Measure (POVM). This includes the case of projective measurements. The POVM formalism describes the quantum measurement by a set of r effects $\Pi_k$, k=1, ..., r, which are positive operators $\Pi_k \geq 0$ summing up to the identity operator, $\sum_{k=1}^{r} \Pi_k = \mathbb{1}$. The effect $\Pi_k$ is associated with a measurement outcome $m_k$. The application of the quantum measurement to the auxiliary quantum state described by a density operator $\rho_{aux}$ results in a plurality of measurement outcomes $m_{k_1},...,m_{k_s}$, wherein the probability to obtain the measurement outcome $m_k$ is given by $p_k = $ tr$[\rho_{aux}\Pi_k]$. The measurement data comprises these measurement outcomes.

The classical computer determines a training estimator $\tilde{\rho}_t$ of the density operator of the auxiliary quantum state and a validation density operator $\tilde{\rho}_v$ of the density operator of the auxiliary quantum state on the basis of the measurement data. The error of the estimator depends e.g. on the type of quantum measurement, on the number of measurement outcomes in the measurement data, and on the choice of the estimator. Examples will be provided below. In particular, the training estimator and the validation estimator are different from each other, but the invention is not limited to this.

A completely positive (CP) map defined on the linear operator space associated with the Hamiltonian maps a positive operator on the linear operator space to a positive operator on the linear operator space. According to the present invention, the classical computer determines target values for the parameters of a linear map of a parametric family $\mathcal{M}_{\hat{\theta}}$ of linear maps defined on the linear operator space associated with the Hamiltonian such that the value of the cost function complies with the optimization criterion. According to the invention each linear map of the family of linear maps is described by a plurality of parameters $\hat{\theta}$. In the following, $\mathcal{M}_\theta$ denotes a map with parameter values $\theta$ for the parameters $\hat{\theta}$. In one example, the value of the cost function may comply with the optimization criterion when a minimization criterion or a maximization criterion is fulfilled. For example, the value of the cost function may comply with the optimization criterion if it is below or above a predetermined threshold value.

For a given map $\mathcal{M}_\theta$ of the family of maps with parameter values $\hat\theta$, the value of the cost function C is indicative of the value of the trace of the product of the Hamiltonian H and the image of the training estimator under the map, i.e., tr[$\mathcal{M}_\theta$ ($\tilde\rho_t$)H]. In one example, the cost function is the trace of the product of the Hamiltonian H and the image of the training estimator under the map, i.e., $C(\theta)$ = tr[$\mathcal{M}_\theta$ ($\tilde\rho_t$)H], but the invention is not limited to this. If $\mathcal{M}_\theta$ ($\tilde\rho_t$) is a valid density operator, tr[$\mathcal{M}_\theta$ ($\tilde\rho_t$)H] is an energy value of a quantum state. In particular, the cost function may be optimized so as to determined the target parameter values for which the trace of the product of the Hamiltonian H and the image of the training estimator under the map, i.e. tr[$\mathcal{M}_\theta$ ($\tilde\rho_t$)H], is minimal. The classical computer may carry out an optimization routine known in the art to determine the target parameter values. The target parameter values define an auxiliary target map $\mathcal{M}_{\theta_{tar}}^{aux}$ which is the map of the family of maps with the target parameter values $\theta_{tar}$. The target estimator $\tilde\rho_{tar}$ of the ground state density operator is determined as the image of the validation estimator under the target map, $\tilde\rho_{tar}$ = $\mathcal{M}^{tar}$ ($\tilde\rho_v$). To ensure that the target estimator is an estimator of a valid density operator, i.e., in particular its trace is equal to, or at least close to one, the method according to the first aspect of the present invention further comprises calculating, by the classical computer, the validation value $v_v$ which is the trace of the image of the validation estimator under the auxiliary target map, i.e., $v_v = \mathrm{tr}\big[\mathcal{M}_{\theta_{tar}}^{aux}(\tilde\rho_v)\big]$. Then, the classical computer identifies the target map $\mathcal{M}^{tar}$ as the auxiliary map divided by the normalization factor, i.e., $\mathcal{M}^{tar}(\cdot) = \mathcal{M}_{\theta_{tar}}^{aux}(\cdot)/\kappa$. The normalization factor $\kappa$ depends on the validation value $v_v$ and is such that the deviation of the trace of the image of the validation estimator under the target map from one, |tr[$\mathcal{M}^{tar}$ ($\tilde\rho_v$)] - 1| complies with a predetermined trace criterion. In one example, the deviation complies with the trace criterion if the deviation is below a predetermined deviation threshold value, |tr[$\mathcal{M}^{tar}$ ($\tilde\rho_v$)] - 1| < $t_d$.

In one example, the cost function may be so as to ensure that the deviation of the trace value from one is below a predetermined threshold value for the target parameter values. Then, the classical computer identifies the target map as the auxiliary map, i.e., the map of the family of CP maps with the target parameter values.

The target estimator $\tilde\rho_{tar}$ = $\mathcal{M}^{tar}$ ($\tilde\rho_v$) has a trace close to one, as enforced by the trace criterion, and is a considered as a valid approximation of a density operator within the invention. Furthermore, the target estimator may be closer to the ground state density operator than the target and validation estimators as the value of the cost function for the auxiliary target map complies with the optimization criterion. The method according to the first aspect of the present invention provides an efficient way to estimate a ground state property of a quantum system with higher accuracy compared to the prior art. In particular, in contrast to the method disclosed in arxiv:2212.10225v1, no intricate method steps that ensure trace-preservation of the quantum channels during the whole optimization process is required.

The target estimator may be used to determine the ground state property by further data processing.

In one embodiment of the method according to the first aspect of the present invention, the classical computer may determine the target parameter values such that a difference between the validation value $v_v$ and a training value $v_t$ which is a trace of the image of the training estimator under the auxiliary target map, $v_t = \mathrm{tr}\big[\mathcal{M}_{\theta_{tar}}^{aux}(\tilde\rho_t)\big]$, fulfills a difference condition. In one example, the difference condition is fulfilled when the absolute value of the difference is below a predetermined difference value $\delta_v$, i.e., $|v_v - v_t| < \delta_v$. In this way, overfitting may be prevented. In one example, the predetermined difference value may be a function of the standard errors of the validation and training values. For example, when the training estimator value is calculated by use of duals $D_m$ of a POVM (see also below), the standard errors may be defined as

$$\epsilon_t = \sqrt{\frac{1}{|M_t|}\left[\frac{1}{|M_t|}\sum_{m_s \in M_t}\mathrm{tr}\big(\mathcal{M}_\theta(D_m)\big)^2 - \mathrm{tr}\big(\mathcal{M}_\theta(\tilde\rho_t)\big)^2\right]} \quad,$$

$$\epsilon_v = \sqrt{\frac{1}{|M_v|}\left[\frac{1}{|M_v|}\sum_{m_s \in M_v}\mathrm{tr}\big(\mathcal{M}_\theta(D_m)\big)^2 - \mathrm{tr}\big(\mathcal{M}_\theta(\tilde\rho_v)\big)^2\right]} \quad.$$

Here, $M_t$ and $M_v$ are target and validation sets of measurement outcomes of the measurement data.

The difference condition may be fulfilled if $|v_v - v_v| < g(\epsilon_t, \epsilon_v)$ for a predetermined function g of the standard errors.

In another embodiment of the method according to the first aspect of the present invention, if the deviation of the validation value from one is above a predetermined validation threshold value, the classical computer calculates the normalization factor as a trace of the image of the training estimator under the auxiliary optimal map, i.e., the normalization factor is the training value, $\kappa = v_t = \text{tr}\left[\mathcal{M}_{\theta_{tar}}^{aux}(\tilde{\rho}_t)\right]$. For this embodiment, it is particularly useful if additionally the classical computer determines the target parameter values such that the difference between the validation value $v_v$ and the training value $v_t$ fulfills the difference condition. In one example, the classical computer may calculate the difference between the validation value $v_v$ and a training value $v_t$ and verify whether the difference condition is fulfilled, e.g., whether the difference is below the predetermined difference value.

According to yet another embodiment of the present invention, if the deviation of the validation value from one is below the predetermined validation threshold value, the normalization factor is one and the classical computer identifies the target map as the auxiliary target map.

In one example, the classical computer calculates the validation value once the target parameter values are determined, and verifies whether the deviation of the validation value from one is below the predetermined validation threshold value. If yes, the classical computer identifies the target map as the map of the family of CP maps with the target parameter values, i.e., the auxiliary target map. If no, the classical computer identifies the target map as the auxiliary target map divided by the training value.

In one example of the embodiment, the cost function may further comprise a penalty term which is proportional to a deviation of a trace of an image of the validation estimator under the map from one and complying with the optimization criterion comprises that the deviation is below the predetermined validation threshold value. I.e., the penalty term is proportional to $|\text{tr}[\mathcal{M}_\theta(\tilde{\rho}_v)]$ - $1|$. In one example, the cost function may be of the form $C(\theta) = \text{tr}[\mathcal{M}_\theta(\tilde{\rho}_t)H] + \tilde{\alpha}|\text{tr}[\mathcal{M}_\theta(\tilde{\rho}_v)]$ - $1|$ with a positive prefactor $\tilde{\alpha}$. This prefactor may be chosen appropriately by a user of the method in one example. Such a cost function may be efficiently optimized by use of known optimization algorithms.

According to an embodiment of the method according to the first aspect of the present invention, the ground state property may be associated with an operator, preferably a Hermitian operator, and the method may further comprise estimating the ground state property by calculating, by the classical computer, a trace of a product of the target estimator of the ground state density operator and the operator. In one example, the ground state property may be the energy of the quantum system. In this case, the Hermitian operator is the Hamiltonian. However, the invention is not limited to this, and other possible physical properties may include, in the case of chemical systems, the polarizability, the dipole moment, and the electric field gradient.

According to yet another embodiment of the method according to the first aspect of the present invention, the quantum measurement may be described by an informationally complete (IC) Positive Operator Valued Measure (POVM) with a plurality of effects, each effect being associated with a measurement outcome, the measurement data may comprise the measurement outcomes of the quantum measurement, and the classical computer may determine the training and validation estimators from the measurement data and a set of dual operators of the plurality of effects. As the POVM is IC, the classical computer may determine the training and validation estimators from the measurement outcomes and a set of duals of the effects. A representation of the set of duals may be received by the classical computer as an input in one example. In another example, the classical computer may receive a description of the POVM in terms of the effect as an input and determined the set of duals from the effects. For an IC POVM described by the effects $\Pi_m$, k=1, ..., r, the set of duals $\Pi_m$, k=1, ..., r fulfills $O = \Sigma_m \text{tr}(\Pi_m O)D_m$ for every linear operator O defined on the linear operator space associated with the Hilbert space. Given the measurement data with S measurement outcomes $m_{k_0},...,m_{k_{S-1}}$, the classical computer determines the training and validation operators according to $\tilde{\rho}_t = \frac{1}{|M_t|}\Sigma_{m_s \in M_t} D_{m_s}$ and $\tilde{\rho}_v = \frac{1}{|M_v|}\Sigma_{m_s \in M_v} D_{m_s}$ wherein $M_t$ is a training set and $M_v$ is a validation set which are subsets of the measurement outcomes of the measurement data.

According to another embodiment of the method according to the first aspect of the present invention, the classical computer may determine the target values for the parameters of the map by an iterative routine, wherein starting from an initial map of the family of maps having initial parameter values the classical computer calculates the value of the cost function and determines input parameter values of an input map of the next iteration on the basis of the calculated value of the cost function and the map of the iteration until the calculated value of the cost function complies with the optimization criterion. The iterative routine may be any optimization routine known in the art.

According to an embodiment of the method according to the first aspect of the present invention, each map of the family of maps may have a map tensor network representation comprising a plurality of parameter-dependent map tensors, the Hamiltonian representation may be a Hamiltonian tensor network representation comprising a plurality of Hamiltonian tensors, wherein the training estimator of the density operator may have a training tensor network representation comprising a plurality of training tensors and the validation estimator of the density operator may have a validation tensor network representation comprising a plurality of validation tensors, and wherein the classical computer may calculate the value of the cost function and the validation value on the basis of the map tensors, the Hamiltonian tensors, the training tensors and the validation tensors in accordance with a predetermined contraction rule of physical and virtual indices of the tensor network representations.

A tensor may be understood as a series of numbers labeled by N Indices with N called the order of the tensor. In this language, a scalar is a tensor of order zero. A vector with k components is a first-order tensor, and a matrix is a second order tensor.

A tensor network representation of a vector, a tensor, an operator, a map, etc. may comprise a plurality of tensors and a contraction rule for theses tensors. The contraction rule specifies which indices of which tensors are contracted in which order. For example, any D-dimensional N-qudit operator Q may be represented as $Q = \sum_{i_0,...,i_{N-1},j_0,...,j_{N-1}=0}^{D-1} q_{i_0,...,i_{N-1}}^{j_0,...,j_{N-1}} |i_0, ..., i_{N-1}\rangle\langle j_0, ..., j_{N-1}|$, wherein $|i_0, ..., i_{N-1}\rangle$ is a basis state for the Hilbert space of the N qudits and $|i_0, ..., i_{N-1}\rangle\langle j_0, ..., j_{N-1}|$ is a basis state for the space of operators associated with the Hilbert space of the N qudits. Then, the coefficients $q_{i_0,...,i_{N-1}}^{j_0,...,j_{N-1}}$ may be represented by a tensor network, e.g., according to $q_{i_0,...,i_{N-1}}^{j_0,...,j_{N-1}} \approx$

$$\sum_{v_0,...,v_{N-1}=0}^{\chi-1} A_{i_0,j_0,v_0}^{[0]} A_{i_1,j_1,v_0,v_1}^{[1]} A_{i_2,j_2,v_1,v_2}^{[2]} ... A_{i_{N-2},j_{N-2},v_{N-2},v_{N-1}}^{[N-2]} A_{i_{N-1},j_{N-1},v_{N-1}}^{[N-1]}$$ . The objects $A_{i_k,j_k,v_{k-1},v_k}^{[k]}$, $A_{i_p,j_p,v_p}^{[p]}$ are tensors. The tensor $A^{[k]}$ is associated with the k-th qudit. The indices $i_k j_k$ are called physical indices, the indices $v_k$ are called virtual indices. $\chi$ is called the bond dimension. The larger the bond dimension, the smaller the error in representing the coefficients by their tensor network representation. As stated above, the tensor network representation may comprise the tensors ( $A_{i_k,j_k,v_{k-1},v_k}^{[k]}$, $A_{i_p,j_p,v_p}^{[p]}$ in the example) and the contraction rule, i.e., a rule how summation over the indices is carried out. In the example above where the coefficients $q_{i_0,...,i_{N-1}}^{j_0,...,j_{N-1}}$ are represented by the tensors, the virtual indices are contracted. It is known in the art that tensor network representations of operators, maps, tensors, etc., are useful for performing efficient calculations with these quantities. This may include the contraction of physical and/or virtual indices. The tensor network representation may comprise a Matrix Product State representation, a Matrix Product Operator representation, a Tree Tensor Network representation, but it is not limited to this.

In one example, each map of the family of maps may have a Matrix Product Operator representation. In particular, each map may be represented as $\mathcal{M}_\theta(Q) = \sum_k \Lambda_k Q \Lambda_k^\dagger$ with Kraus operator $\Lambda_k(\theta)$ that depend on the parameters $\theta$, and each Kraus operator has a Matrix Product Operator (MPO) representation. The structure of the MPO representation is described in arxiv:2212.10225v1 for N-qubit systems, the content of which is entirely included in this specification by reference.

According to an embodiment of the method according to the first aspect of the present invention, the classical computer may determine the training estimator by use of a training set of measurement data selected from the measurement data and may determine the validation estimator by use of a validation set of measurement data selected from the measurement data, wherein the training set and the validation set are disjoint sets. Thereby, the target map is determined on the basis of the training set of measurement data and the target estimator of the ground state density operator is determined on the basis of the validation set of measurement data. As a consequence, the target estimator is an unbiased estimator that allows for an unbiased estimation of the physical property of the quantum system.

According to an embodiment of the method according to the first aspect of the present invention the classical computer may further determine the target parameter values of the map such that a difference between a training energy value $\mu_t$ which is a trace of a product of the Hamiltonian and an image of the training estimator under the map, $\mu_t = \mathrm{tr}[H \mathcal{M}_\theta(\tilde{\rho}_t)]$, and a validation energy value $\mu_v$ which is a trace of a product of the Hamiltonian and an image of the validation estimator under the map, $\mu_v = \mathrm{tr}[H \mathcal{M}_\theta(\tilde{\rho}_v)]$, fulfills an energy difference criterion. In one example, the energy difference criterion may be fulfilled if the absolute value of the difference between the training energy value and the validation energy value is bounded by a value of a predetermined threshold energy difference threshold value, $|\mu_t - \mu_v| < \delta_\mu$. In one example, the energy difference criterion may be fulfilled if the absolute value of the difference between the training energy value and the validation energy value is bounded by a value of a predetermined first function of standard errors of the training and validation energies.

The method according to the first aspect of the present invention determines the target parameter values so that the value of the cost function complies with an optimization criterion. In one particular example, the cost function is optimized so as to minimize the trace of the product of the Hamiltonian H and the image of the training estimator under the map, i.e., the training energy value. However, this is not an unbiased estimator for the ground state energy of the quantum system. In particular, the optimization process may exploit features that are specific to the training estimator which are not necessarily representative of the ground state density operator. This may be referred to as "overfitting". On the other hand, the trace of the product of the Hamiltonian H and the image of the validation estimator under the target map is an unbiased estimator of the energy of the quantum system. A divergence of the training energy and the validation energy is an indicator of overfitting. According to an example of the embodiment, overfitting is prevented by calculating, by the classical computer, the standard errors of the training energy $\mu_t = \mathrm{tr}[\mathcal{M}_\theta(\tilde{\rho}_t)H]$ and the validation energy $\mu_v = \mathrm{tr}[\mathcal{M}_\theta(\tilde{\rho}_v)H]$ and the standard error $\sigma_t$ of the training energy and the standard error $\sigma_v$ of the validation energy. For example, when the training estimator is calculated by use of the duals of an IC POVM as explained above, the standard errors are of the form

$$\sigma_t = \sqrt{\frac{1}{|M_t|}\left[\frac{1}{|M_t|}\sum_{m_s \in M_t} \mathrm{tr}(\mathcal{M}_\theta(D_m)H)^2 - \mathrm{tr}(\mathcal{M}_\theta(\tilde{\rho}_t)H)^2\right]} \quad,$$

$$\sigma_v = \sqrt{\frac{1}{|M_v|}\left[\frac{1}{|M_v|}\sum_{m_s \in M_v} \mathrm{tr}(\mathcal{M}_\theta(D_m)H)^2 - \mathrm{tr}(\mathcal{M}_\theta(\tilde{\rho}_v)H)^2\right]} \quad.$$

In one example, the value of the cost function may comply with the optimization criterion if $|\mu_t - \mu_v| < f(\sigma_t, \sigma_v)$ for a predetermined function f of the standard errors.

According to yet another embodiment of the invention, the method may further comprise creating the measurement data by executing a quantum circuit by the quantum processor to thereby obtain the auxiliary quantum state and by applying the quantum measurement to the auxiliary quantum state. In particular, the quantum circuit may be configured to prepare the ground state of the Hamiltonian or an approximation thereof. For example, the quantum circuit may be for implementing a VQE algorithm.

According to a second aspect of the present invention, there is provided a computer program product comprising instructions, which, when the computer program product is executed by a classical computer cause the classical computer to carry out the method according to anyone of the above embodiments.

According to a third aspect of the present invention, there is provided a data carrier having stored thereon the computer program product of the third embodiment. In particular, the data carrier is a non-transitory data carrier.

According to a fourth aspect of the present invention, there is provided a computer system for estimating a ground state property of a quantum system described by a Hamiltonian, the computer system comprising a quantum processor and a classical computer, wherein the quantum processor is configured to execute a quantum circuit to thereby obtain an auxiliary quantum state, to apply a quantum measurement to the auxiliary quantum state to thereby create measurement data and to provide the measurement data to the classical computer, and the classical computer is configured to carry out the method according to the first aspect of the present invention.

In the following, the invention is described in further detail by way of example in which

Fig. 1 is a schematic representation of an embodiment of the computer system according to the fourth aspect of the present invention.

Fig. 2 is a flow chart of an embodiment of the method according to the first aspect of the present invention;

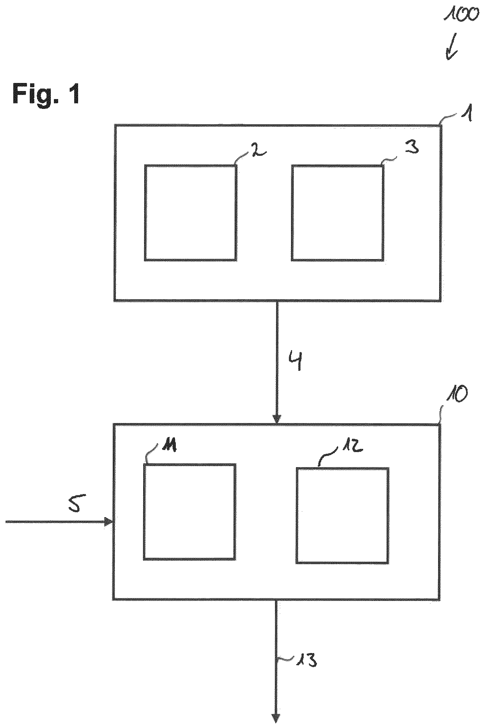

Figure 1 is a flow chart of an embodiment of the computer system 100 according to the fourth aspect of the present invention. The computer system comprises a quantum processor 1 and a classical computer 10. The quantum computer 1 comprises means 2 for execution a quantum circuit which may include state preparation means for preparing an initial quantum state of qubits (or qudits with d>2) of the quantum processor and means for applying a sequence of quantum gates to the quantum state. The quantum processor 1 is configured to execute the quantum circuit by use of the means 2 to thereby obtain an auxiliary quantum state. Furthermore, the quantum processor 1 comprises means 3 for applying a quantum measurement to the auxiliary quantum state to thereby create measurement data. The quantum processor 1 and the classical computer 10 are in communication, e.g., via a network 4 so that the classical computer may receive the measurement data as an input. The classical computer 10 is configured to receive the measurement data as an input. The classical computer is further configured to receive a representation of a Hamiltonian H which describes a quantum system of interest, e.g., via a user input 5. The classical computer 10 performs calculations on the basis of classical bits. The classical computer comprises a classical processor 11 and a classical memory 12.

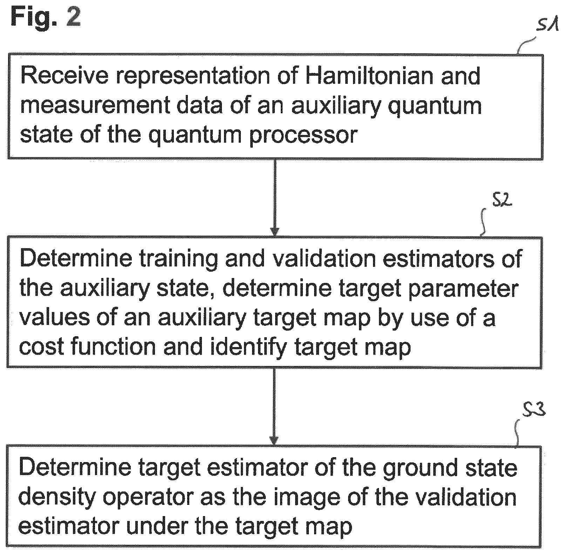

The classical computer 10 is configured to carry out the method according to the first aspect of the present invention, an example of which is explained with reference to Fig. 2. Thereby, the classical computer 10 determines the target estimator of the ground state density operator of the Hamiltonian. The classical computer 10 may determine the ground state property of the Hamiltonian by use of the ground state density operator via further data processing. The classical computer is configured to output 13 the result of the calculation which may include the target estimator and/or the ground state property.

Fig. 2 is a flow chart of an embodiment of the method according to the first aspect of the present invention. At step S1, the classical computer 10 receives a representation of the Hamiltonian H and measurement data of the auxiliary quantum state of the quantum processor 1. At step S2, the classical computer 10 determines training and validation estimators of the auxiliary state, determines target parameter values of an auxiliary target map by use of a cost function and identifies a target map. At step S3, the classical computer determines the target estimator of the ground state density operator as the image of the validation estimator under the target map.

Further details of exemplary embodiments of the method according to the first aspect of the present invention are presented below.

## 1 Background

Simulating the ground or excited states of a given quantum mechanical Hamiltonian is an important task for many applications, for instance, in chemistry and materials science. These states can generally be highly entangled, which makes their simulation on classical computers challenging.

Amongst the vast plethora of classical simulation techniques, tensor network methods such as Density Matrix Renormalization Group (DMRG), play a critical role. In DMRG, states are approximated as Matrix Product States (MPS) of a predefined bond dimension $\chi$. The value of $\chi$ determines the accuracy and the computational cost of the method (the higher $\chi$ is, the more accurate and costly the method becomes). In many cases of practical relevance, classical methods fail to solve the problem within affordable resource requirements; DMRG, in particular, requires too large a bond dimension $\chi$.

Quantum computers were originally conceived as a means to simulate quantum systems, leveraging on the ability of qubits to get physically entangled to a high degree. Near-term quantum computers face significant challenges. Noise prevents the correct execution of unitary gates, resulting in noisy quantum channels that decrease the purity of the state of the qubits. Consequently, only relatively shallow circuits can lead to non-trivial results. Shallow circuits, however, have strongly limited expressivity, that is, can only result in a very small set of different states, rendering the prospect of approximating a large class of relevant eigenstates improbable.

1.1 Hybrid quantum-classical computational framework relevant to this disclosure

This section reviews the hybrid quantum-classical computational framework relevant to this disclosure, developed by some of the inventors in previous publications. Consider an $N$-qudit quantum state described by a density operator $\varrho \in \mathcal{L}(\mathcal{H})$, where $\mathcal{L}(\mathcal{H})$ is the space of linear operators in the N-qudit Hilbert space $\mathcal{H}$, physically prepared on a quantum computer. By slight abuse of notation, $\varrho$ may be used for the density operator and the quantum state in the following. Suppose that state $\varrho$ is measured through Informationally Complete (IC) Positive Operator-Valued Measures (POVM). A POVM is a physical quantum-mechanical measurement described by a set of effects $\mathcal{P} = \{\Pi_m : \Pi_m > 0 \,\forall m, \sum_m \Pi_m = \mathbb{I}\}$. If the operators in $\mathcal{P}$ form a basis of $\mathcal{L}(\mathcal{H})$, the POVM is IC. If the POVM is IC, a possibly non-unique set of dual operators $D = \{D_m\}$, fulfilling

$$O = \sum_m \mathrm{tr}(\Pi_m O) D_m, \,\forall O \in \mathcal{L}(\mathcal{H}), \tag{1}$$

may be defined.

A measurement on state $\varrho$ with POVM $\mathcal{P}$ yields outcome $m$ with probability $p_m = \mathrm{tr}(\Pi_m \varrho)$. Using the defining property of the dual operators $\mathcal{D}$, Eq. (1), we can readily see that

$$\varrho = \sum_m p_m D_m = \mathbb{E}[D_m], \tag{2}$$

where E[.] stands for the average over the outcome probability distribution $p_m$. For S statistically independent measurement shots, resulting in outcomes $m_0,...,m_{S-1}$, the operator

$$\tilde{\varrho} = \frac{1}{S} \sum_{s=0}^{S-1} D_{m_s} \qquad (3)$$

is an unbiased estimator of the density operator $\varrho$, that is,

$$\mathbb{E}[\tilde{\varrho}] = \varrho, \qquad (4)$$

where $\mathbb{E}[\cdot]$ stands now for the average over S samples drawn from $p_m$.

Given a linear map $\mathcal{M}: \mathcal{L}(\mathcal{H}) \to \mathcal{L}(\mathcal{H})$ and an operator $\varrho \in \mathcal{L}(\mathcal{H})$, we can produce an estimator for the quantity $\mathrm{tr}(\mathcal{M}(\varrho)O)$ as

$$\mathrm{tr}(\mathcal{M}(\tilde{\varrho})O) = \frac{1}{S} \sum_{s=0}^{S-1} \mathrm{tr}(\mathcal{M}(D_{m_s})O) \qquad (5)$$

which, owing to Eq. (4) and the linearity of M, is unbiased:

$$\mathbb{E}\left[\frac{1}{S} \sum_{s=0}^{S-1} \mathrm{tr}(\mathcal{M}(D_{m_s})O)\right] = \mathrm{tr}(\mathcal{M}(\varrho)O). \qquad (6)$$

It is also possible to produce an estimator $\sigma$ for the standard error of the above estimation based on the sample variance of the quantity averaged over the set of shots, $\mathrm{tr}(\mathcal{M}(D_{m_s})O)$, as

$$\sigma = \sqrt{\frac{1}{S}\left[\frac{1}{S} \sum_{s=0}^{S-1} \mathrm{tr}(\mathcal{M}(D_{m_s})O)^2 - \mathrm{tr}(\mathcal{M}(\tilde{\varrho})O)^2\right]}. \qquad (7)$$

Operationally, these computations require calculating scalars $\mathrm{tr}(\mathcal{M}(D_{m_s})O)$ on a classical computer, which imposes practical limitations on the complexity of O, *M,* and the dual operators in $\mathcal{D}$.

Importantly, Eq. (6) is guaranteed to be unbiased if the map $\mathcal{M}$ is independent of the measurement outcome data $m_0, \dots, m_{S-1}$. If *M* depends on said outcomes - for instance, if it has been optimised or trained based on that same data-the estimator may be biased. In such case, $\mathcal{M}$ itself must be regarded as a random variable (given that it explicitly depends on randomly drawn data) correlated with $\tilde{\varrho}$. One way to circumvent this crucial limitation is to divide the data into *K* subsets $M_0, \dots, M_{K-1}$, such that each measurement outcome is assigned to one of the subsets. For each subset *k*, the operator

$$\tilde{\varrho}_k = \frac{1}{|M_k|} \sum_{m_s \in M_k} D_{m_s} \qquad (8)$$

produces an unbiased estimator of $\varrho$, and all $\tilde{\varrho}_k$, $k = 0,..., K - 1$ are independent of each other. A map $\mathcal{M}_k$ optimised, trained, or otherwise correlated only with dataset $M_k$ is statistically independent of all other datasets, so the estimator

$$\frac{1}{|M_l|} \sum_{m_s \in M_l} \mathrm{tr}(\mathcal{M}_k(D_{m_s})O) \qquad (9)$$

is unbiased for $l \neq k.$ This observation can be exploited to optimise maps on finite statistical data; the map can be trained on one dataset and cross-validated on other, statistically independent sets.

Equations (6)-(9) can be used to find a map $\mathcal{M}$ such that $\mathcal{M}(\varrho)$ approximates well the target density operator of the state to be simulated even when $\varrho$ may be noisy or otherwise incorrect, as originally introduced in prior works of some of the inventors, discussed below:

1. *Virtual Linear Map Algorithm (VILMA),* introduced in Ref. [5]. Intended for ground state simulation. The map $\mathcal{M}$ is composed of few-qubit Completely Positive (CP) and Trace Preserving (TP) maps arranged in a circuit structure. The maps are sequentially optimised variationally as to minimise the resulting energy tr($\mathcal{M}(\varrho)H$), where *H* is the system Hamiltonian. The circuit of CP and TP maps contains few degrees of freedom per layer, and is hard to optimise, as it tends to get trapped in local minima. As a result of these limitations, VILMA has difficulty mitigating errors in calculations affected by high levels of noise, such as those performed on the relatively noisy currently available quantum computers.

2. *Variationally Optimised Matrix Product Channel (VOMPC),* introduced in Ref. [2]. Intended for ground state simulation. The map .M is represented as a tensor network, a so-called Matrix Product Channel (MPC). The MPC is CP by construction. The VOMPC method variationally minimises the energy, as in VILMA, whilst imposing that the map be TP to guarantee that $\mathcal{M}(\varrho)$ is a state. The optimisation is carried out by splitting the data in two datasets for training and cross-validation, according to Eq. (9). Imposing TP, which is a global constraint on the map, is an arduous task, and makes the optimisation of the map very expensive. Consequently, only small bond dimension MPCs are affordable. The expressivity of the M is further limited by the TP condition, as only a subset of tensor network parameters results in TP maps. These factors combined hinder the applicability of the method in practice, as current quantum computers exhibit high levels of noise as a result of which substantial transformations to the noisy state are required.

3. *Tensor network error mitigation (TEM),* introduced, analysed, and experimentally demonstrated in Refs. [1, 3, 4]. Intended as a tool to mitigate the detrimental effects of physical noise affecting the execution of circuits in arbitrary tasks that involve evaluating expectation values of observables. The map M is represented as a tensor network. The method requires precise knowledge of the physical errors affecting the results. The map is constructed as to implement a linear transformation that cancels the effects of noise. The method relies on the accurate characterisation of noise in the device, with imprecisions in the characterisation of errors leading to inaccurate mitigated results. However, noise characterisation is expensive and noise parameters may drift over short timescales in current quantum computers. The high levels of noise present in current quantum computers prevent the execution of deep quantum circuits, and shallow quantum circuits typically fail to approximate the target eigenstate accurately enough. TEM cannot currently correct for such algorithmic errors.

## 2 Disclosure and embodiments

Determining the properties of the ground state of many-body quantum systems is crucial to many industries, with important applications in pharmacology and materials science, among others. Simulating ground states is generally out of reach for current classical computing technology. In particular, given an operator H representing the Hamiltonian of the system under study, the amount of memory and/or time required for the exact simulation of its ground state is generally exponential in the size of the system. Quantum computers are expected to overcome this limitation, but the power of current quantum technology is severely limited by hardware noise. This disclosure pertains to a method to integrate quantum and classical computers into a hybrid quantum-classical system to address the ground state problem. The method operates in two stages. Firstly, the ground state is approximated on a quantum computer. The resulting approximation (auxiliary quantum state) may be insufficiently accurate due to errors (for instance, due to hardware noise or other reasons). Secondly, the data produced by the quantum computer is post-processed by a classical computer in an error mitigation stage. This disclosure can result in the computational capabilities of the joint, hybrid system in tackling this problem being superior to those of each technology individually.

2.1 Preferred embodiment

1. Data acquisition stage. This disclosure considers a quantum computer comprising N qudits. The quantum computer may be noisy, e.g., it may be a near-term quantum computer. It operates by implementing sequences of quantum gates (circuits), which alter the state of its qudits. To tackle the ground state problem for operator H, the quantum computer is given a circuit such that the resulting auxiliary quantum state of the qudits $\varrho$ approximates the ground state of H. This disclosure is not concerned with the means by which such circuit is generated. The density operator of the state produced by the execution of the circuit, $\varrho$, may be unknown. The auxiliary quantum state of the qudits is measured through an IC POVM $\mathcal{P}$, the effects of which may be unknown. This prepare- and-measure process is repeated $S$ times, producing $S$ measurement outcomes $m_0,...,m_{S-1}$. Error mitigation stage. According to this disclosure, the measurement outcome data $m_0,...,m_{S-1}$ is inputted into a classical computer. Said classical computer must encode, at least:

A. The classical representation of dual effects $\mathcal{D}$ fulfilling Eq. (1) for $\mathcal{P}$.

B. The classical representation of operator H.

C. The classical representation of a parametric family of CP, possibly non-TP, maps $\mathcal{M}_\theta$; that is, different values of the multi-dimensional variable $\theta$ may lead to different CP maps $\mathcal{M}_\theta$.

The three elements A, B, and C are such that the calculation of the quantity tr($\mathcal{M}_\theta(D_m)H$) for any outcome m and any parameter values $\theta$ for which the quantity is well defined and finite can be carried out efficiently on the classical computer.

This stage of the method consists in finding a value of $\theta$ for which $\mathcal{M}_\theta$ maps the density operator of the auxiliary quantum state $\varrho$ closer to density operator of the ground state, that is, such that $\mathcal{M}_\theta$ is a better approximation of the density operator of the ground state of operator H than $\varrho$ itself. The error mitigation stage proceeds according to the following steps:

1. The measurement data is divided in two sets, training $M_t$ and validation $M_v$, such that each outcome $m_0,...,m_{S-1}$, belongs to one of them. The two sets need not be of equal size, although it may be preferable in some embodiments. The training set defines a training estimator $\tilde{\varrho}_t$ of the auxiliary quantum state as

$$\tilde{\varrho}_t = \frac{1}{|M_t|} \sum_{m_s \in M_t} D_{m_s} \qquad (10)$$

and the validation set a validation estimator of the auxiliary quantum state as

$$\tilde{\varrho}_v = \frac{1}{|M_v|} \sum_{m_s \in M_v} D_{m_s}. \qquad (11)$$

2. Multi-dimensional parameter $\theta$ is initialised to some initial value such that

$$\left| \frac{1}{|M_v|} \sum_{m_s \in M_v} \text{tr}(\mathcal{M}_\theta(D_{m_s})) - 1 \right| < \epsilon, \qquad (12)$$

where $\varepsilon$ is a predefined threshold parameter.

3. An optimisation routine carried out by the classical computer minimises the quantity

$$\mu_t = \frac{1}{|M_t|} \sum_{m_s \in M_t} \text{tr}(\mathcal{M}_\theta(D_{m_s})H) \qquad \text{(training energy value)} \qquad (13)$$

with respect to $\theta$, subjected to the constraint in Eq. (12). At each minimisation step carried out by the optimiser, the following quantities are computed:

$$\mu_v = \frac{1}{|M_v|} \sum_{m_s \in M_v} \text{tr}(\mathcal{M}_\theta(D_{m_s})H) \qquad \text{(validation energy value)}, \qquad (14)$$

$$\nu_t = \frac{1}{|M_t|} \sum_{m_s \in M_t} \text{tr}(\mathcal{M}_\theta(D_{m_s})) \qquad \text{(training value)}, \qquad (15)$$

$$\nu_v = \frac{1}{|M_v|} \sum_{m_s \in M_v} \mathrm{tr}(\mathcal{M}_\theta(D_{m_s})) \qquad \text{(validation value)} \qquad (16)$$

The values of $\mu_v$, along with the corresponding value of $\theta$ with which they are obtained, are stored on the classical computer throughout the minimisation. The process ends when

$$|\mu_t - \mu_v| > \delta_\mu, \qquad (17)$$

or

$$|\nu_t - \nu_v| > \delta_\nu, \qquad (18)$$

where $\delta_\mu$ and $\delta_\nu$ are two predefined threshold parameters.

4. The minimum of all the values of $\mu_v$ evaluated along the process and the corresponding value of $\theta$ are returned. Said value of $\mu_v$ approximates the ground-state value of operator H. Other properties of the ground state may be approximated using the returned value of $\theta$. In particular, the expectation value of a property represented by operator *O* may be approximated as

$$\beta_v = \frac{1}{|M_v|} \sum_{m_s \in M_v} \mathrm{tr}(\mathcal{M}_\theta(D_{m_s})O). \qquad (19)$$

*Rationale behind the method:* The method guarantees that the optimisation is carried out under the constraint that $\mathcal{M}_\theta(\varrho)$ be approximately a density operator of a state, in accordance with Eqs. (12) and (9). Therefore, the above minimisation problem is variational, as it approximates the minimisation of the expectation value of *H* over the set of accessible states $\{\mathcal{M}_\theta(\varrho)\}_\theta$. Importantly, only partial information about the state $\varrho$, namely the set of dual effects $\mathcal{D}$ and measurement outcomes $m_0,...,m_{S-1}$, is needed. The stopping criterion ensures there is no overfitting of the measurement outcome data, as the quantities evaluated on the training and validation datasets are in good agreement. The method further ensures that $\mu_v$ is an unbiased estimator of the mean value of *H* for any $\theta$, as the map remains uncorrelated with the validation set. The expectation value of other operators may also be evaluated similarly. This optimisation problem offers significant advantages over the prior art, as discussed in Section 3.

### 2.2 Additional preferred embodiments

2. Method according to 1. where imposing the statistical constraint, Eq. (12), involves rescaling the map $\mathcal{M}_\theta$ by $\nu_t$, $\mathcal{M}_\theta/\nu_t \to \mathcal{M}_\theta$, whenever Eqs. (17) and (18) are not satisfied. If Eq. (18) is not fulfilled, $\nu_t \approx \nu_v$. Upon rescaling, $\nu_v/\nu_t \approx 1 \to \nu_t$

4. Method according to any one of the above where the classical representation of the class of CP maps, element C, is in Kraus form. Any element in the class acts on an input operator Q as $\mathcal{M}_\theta(Q) = \sum_k \Lambda_k Q \Lambda_k^\dagger$, and the Kraus operators $\{\Lambda_k\}$ depend on $\theta$.

5. Method according to 4. where elements A, B, and C are represented as tensor networks on a classical computer. The Kraus operators $\{\Lambda_k\}$ are represented as Matrix Product Operators (MPO). In particular, $\Lambda_k$ comprises tensors $\lambda_0,...,\lambda_{N-1}$. The structure of such MPO is described in detail in Ref. [2] for A-qubit systems.

6. Method according to 5. where the optimisation is carried out by updating all the parameters conforming the MPOs and the constraint is imposed by adding to the cost function a penalty term increasing with

$$\left| \frac{1}{|M_v|} \sum_{m_s \in M_v} \mathrm{tr}(\mathcal{M}_\theta(D_{m_s})) - 1 \right|. \qquad (20)$$

7. Method according to 5. where the optimisation is carried out by updating the parameters conforming the MPOs in blocks of 6 consecutive qudits, where 6 is a predefined parameter. An optimisation step for a size-b block comprising qudits *i, i* + 1,... , *i* + *b* - 1, the method involves the following steps:

    a. The MPOs representing $\{\Lambda_k\}$ are canonised so that the tensors $\lambda_i,...,\lambda_{i+b-1}$, considered as a single tensor, are the orthogonality centres of the MPOs.

b. For each tensor network representing the quantities $\mu_t$, $\mu_v$, $v_t$, and $v_v$ above, all tensors except for tensors $\lambda_i,...,\lambda_{i+b-1}$ are contracted, resulting in local tensors $Ht$, $H_v$, $I_t$, and $I_v$, respectively. The contraction of each of these local tensors with tensors $\lambda_i,...,\lambda_{i+b-1}$ yields each of the quantities $\mu_t$, $\mu_v$, $v_t$, and $v_v$. A local optimiser carries out the optimisation over the local degrees of freedom in tensors $\lambda_i,...,\lambda_{i+b-1}$ using local tensors $H_t$, $H_v$, $I_t$, and $I_v$, which is computationally more efficient than contracting the whole tensor network multiple times throughout the optimisation.

c. Once the optimisation of tensors $\lambda_i,...,\lambda_{i+b-1}$ is finished, the process is repeated for a different block $\lambda_j,...,\lambda_{j+b-1}$, $j \neq i$.

d. The process is terminated when no blocks can be further updated while fulfilling the constraints.

8. Method according to 7. where the optimisation of the tensors $\lambda_i,...,\lambda_{i+b-1}$ is carried out by updating all the parameters in said tensors and the constraint is imposed by adding to the cost function a penalty term increasing with

$$\left| \frac{1}{|M_v|} \sum_{m_s \in M_v} \mathrm{tr}(\mathcal{M}_\theta(D_{m_s})) - 1 \right|. \tag{21}$$

9. Method according to 7. where the optimisation of the tensors $\lambda_i,...,\lambda_{i+b-1}$ is carried out according to the following steps:

a. Tensors $H_t$, $H_v$, $I_t$, and $I_v$ are reshaped into matrices $h_t$, $h_v$, $q_t$, and $q_v$, for instance using standard linear algebra methods.
b. The lowest eigenvector $\vec{g}$ of $h_t$ is computed.
c. The tensors $\lambda_i,...,\lambda_{i+b-1}$ are contracted together into a single b-site tensor and said tensor is reshaped into a vector $\vec{c}$, for instance using standard linear algebra methods.
d. The optimisation proceeds by updating the joint b-site tensor in its vector form according to the expression

$$\frac{\alpha\vec{g} + (1-\alpha)\vec{c}}{\sqrt{(\alpha\vec{g} + (1-\alpha)\vec{c})^T q_t (\alpha\vec{g} + (1-\alpha)\vec{c})}} \to \vec{c}. \tag{22}$$

The value of $\alpha \in [0,1]$ is chosen to be as large as possible whilst fulfilling the constraints in Eqs. (17) and (18). Each relevant quantity $\mu_t$, $\mu_v$, $v_t$, and $v_v$ can be computed efficiently for any $\alpha$ using matrices $h_t$, $h_v$, $q_t$, and $q_v$. For instance, $v_v$ may be computed as $(\alpha\vec{g} + (1 - \alpha)\vec{c})^T q_v(\alpha\vec{g} + (1- \alpha)\vec{c})/[(\alpha\vec{g} + (1 - \alpha)\vec{c})^T q_t(\alpha\vec{g} + (1 - \alpha)\vec{c})]$.
e. Updated vector if is reshaped back into the shape of the multi-site tensor, and the resulting tensor is split into new tensors $\lambda_i,...,\lambda_{i+b-1}$ using successive singular value decompositions.

10. Method according to 7. where the optimisation of the tensors $\lambda_i,...,\lambda_{i+b-1}$ is carried out according to the following steps:

a. Tensors $H_t$, $H_v$, $I_t$, and $I_v$ are reshaped into matrices $h_t$, $h_v$, $q_t$, and $q_v$, for instance using standard linear algebra methods.
b. The tensors $\lambda_i,...,\lambda_{i+b-1}$ are contracted together into a single b-site tensor and said tensor is reshaped into a vector $\vec{c}$, for instance using standard linear algebra methods.
c. The optimisation proceeds by updating the joint b-site tensor in its vector form by performing an imaginary-time evolution step according to the expression

$$\frac{e^{-\Delta t h_t \vec{c}}}{\sqrt{(e^{-\Delta t h_t}\vec{c})^T q_t (e^{-\Delta t h_t}\vec{c})}} \to \vec{c}. \tag{23}$$

The value of $\Delta t > 0$ is chosen to be as large as possible whilst fulfilling the constraints in Eqs. (17) and (18). Each relevant quantity $\mu_t$, $\mu_v$, $v_t$, and $v_v$ can be computed efficiently for any a using matrices $h_t$, $h_v$, $q_t$, and $q_v$. For instance, $v_v$ may be computed as $(e^{-\Delta t h_t}\vec{c})^T q_v(e^{-\Delta t h_t}\vec{c})/[(e^{-\Delta t h_t}\vec{c})^T q_t(e^{-\Delta t h_t}\vec{c})]$.
d. Updated vector $\vec{c}$ is reshaped back into the shape of the multi-site tensor, and the resulting tensor is split into new tensors $\lambda_i,...,\lambda_{i+b-1}$ using successive singular value decompositions.

11. Method according to any one of the above where the standard error of each mean estimate (e.g., $\mu_t$, $\mu_v$, $v_t$, $v_v$, $\beta_v$ and so on) is computed through Eq. (7).

12. Method according to 11. where the predefined parameters $\varepsilon$, $\delta_\mu$, and $\delta_v$ depend on the computed estimated standard error of the quantities $\mu_t$, $\mu_v$, $v_t$, and $v_v$. In particular, $\varepsilon$ is a predefined function of the estimated standard error of $v_v$, $\delta_\mu$ is a predefined function of the estimated standard errors of $\mu_t$ and $\mu_v$, and $\delta_v$ is a predefined function of the estimated standard errors of $v_t$ and $v_v$.

13. Method according to any one of the above where the measurement outcome data $m_0,...,m_{S-1}$ is divided into Z disjoint validation subsets $M_v^{[0]}, \ldots, M_v^{[Z-1]}$ so that each shot $m_0$ belongs to one and only one of the subsets. A training subset $M_t^{[i]}$ is associated with each subset $M_v^{[i]}$. Each training subset $M_t^{[i]}$ contains only measurement data not in the corresponding validation subset $M_v^{[i]}$. Training subsets may contain all the data not in the corresponding validation subsets and therefore be the complements of the validation subsets. The optimisation process in this disclosure is repeated Z times. The i-th time, subset $M_t^{[i]}$ is used as training set and $M_v^{[i]}$ as validation set, and the mean and standard error estimates $\mu_v^{[i]}$ and $\sigma_v^{[i]}$ are produced as an output. The combined estimates of the mean $\mu_v$ and the standard error $\sigma_v$ are computed as

$$\mu_v = \sum_{i=0}^{Z-1} \gamma_i \mu_v^{[i]} \qquad (24)$$

and

$$\sigma_v = \sqrt{\sum_{i=0}^{Z-1} \gamma_i^2 \left(\sigma_v^{[i]}\right)^2}, \qquad (25)$$

where the $\gamma_0, \ldots, \gamma_{Z-1}$ are free positive parameters adding up to 1.

14. Method according to 13. where the parameters $\gamma_0, \ldots, \gamma_{Z-1}$ are chosen as to minimise the final standard error of the estimation, $\sigma_v$. The value of the parameters is computed as

$$\gamma_i = \frac{\left(\sigma_v^{[i]}\right)^{-2}}{\sum_{j=0}^{Z-1} \left(\sigma_v^{[j]}\right)^{-2}}. \qquad (26)$$

This expression is derived in Ref. [6], Appendix D.

## 3 Advantages over existing technologies

The subject matter of this disclosure offers significant advantages over prior and existing technologies.

1. Unlike TEM, this disclosure does not rely on noise characterisation. Noise characterisation on current quantum computers is costly and noise parameters drift over short periods of time. Furthermore, in addition to correcting for hardware noise, it can mitigate errors caused by the lack of accuracy of the circuit itself. Said inaccuracies are prone to occur in implementations relying on current and near-term devices, as hardware noise limits the depth of the circuits that can be executed, and shallow circuits cannot generally approximate ground states of complex quantum systems reliably.

2. Compared with VILMA, the method can operate with much more expressive families of maps, for instance in its tensor network embodiments, thanks to the higher number of degrees of freedom present in tensor network representations. The constraint in Eq. (12) results in a significant ad-vatitage with respect to VOMPC even when both methods use the same tensor network structure. In VOMPC, only map parameters $\theta$ for which the map is TP may be used. In this disclosure, any CP map can be rescaled as to fulfil the constraint. The higher expressivity maps in this disclosure effectively enables accessing more target states from a given reference, noisy state at a similar classical computational cost. This is particularly relevant to improve the computational capabilities of near-term hybrid quantum-classical systems, for which noise on the quantum processing unit limits the quality of producible reference states. The example below further illustrates the importance of this advantage.

3. Compared with VOMPC, the optimisation in tensor network embodiments of the method in this disclosure is easier, owing to the simplicity of the constraint. Eq. (12). In VOMPC, imposing the global TP constraint results in the local optimisation step involving a semi-definite problem. In one embodiment in this disclosure, the optimisation can be implemented through local problems that require solving comparatively easier problems, such as eigensolving. The example below illustrates that the computational cost in solving the local problem in one embodiment in this disclosure is comparable to DMRG's for a given bond dimension $\chi$.

### 3.0.1 Illustrative example

The following example highlights the technological advantages of this disclosure with respect to state-of-the-art methods, like DMRG, and other hybrid quantum-classical technologies, like VOMPC.

Consider a specific embodiment of this disclosure whereby the map $\mathcal{M}$ is of the form $\mathcal{M}(\cdot) = K \cdot K^\dagger$, where $K$ is represented as a bond-dimension-$\chi$ MPO on a classical computer. Compared with VOMPC with the same map structure, as established above, the class of maps accessible to the method in this disclosure is considerably larger thanks to the relaxation of the TP condition. In particular, the constraint that the map be TP in VOMPC implies that $\mathcal{M}$ is a purity-preserving map, i.e., $\mathrm{tr}(\mathcal{M}(\varrho)^2) = \mathrm{tr}(\varrho^2)$, so if the noisy state $\varrho$ produced by the quantum computer is not pure, which is always the case with near-term quantum computers, VOMPC cannot produce a pure state. Therefore, it cannot solve the ground state problem for noisy input states.

Instead, let the Kraus operator A in the map be of the form $K = |\psi\rangle\langle r|$, where $\langle r|$ is an arbitrary bond-dimension-1 vector such that $\langle r|\varrho|r\rangle = 1$ for the noisy state $\varrho$ produced by the quantum computer. Such vectors $\langle r|$ exist for any state $\varrho$. Vector $|\psi\rangle$ is a bond-dimension-x state. Since $\langle r|$ is bond dimension 1 and $|\psi\rangle$ bond dimension $\chi$, $K$ is a bond-dimension-$\chi$ MPO. In this case, the map is not TP, so it is not accessible to VOMPC, but it fulfils the constraint in Eq. (12), so it is accessible to the method in this disclosure. Importantly, $\mathcal{M}(\varrho) = |\psi\rangle\langle\psi|$, so the method in this disclosure can prepare any pure, bond-dimension-x state for any noisy state $\varrho$ given the aforementioned structure of the Kraus operator $K$.

The above analysis reveals that for any state $|\psi\rangle$ accessible to DMRG with bond dimension $\chi$ (the output of which is a Matrix Product State (MPS) of that bond dimension) and any input noisy state $\varrho$, there exists at least one map $\mathcal{M}$ such that the method in this disclosure yields $\mathcal{M}(\varrho) = |\psi\rangle\langle\psi|$. In other words, the space of accessible solutions to the method in this disclosure is formally at least as large as the space accessible to DMRG using purely classical methods if the same bond dimension $\chi$ is used in both methods. However, this pertains to the worst-case scenario. In practice, the method in this disclosure enables approximating states that are beyond reach for DMRC. For instance, the input state $\varrho$ may be a high-bond-dimension state $|\psi'\rangle\langle\psi'|(\chi' \gg \chi)$. In this case, using a bond-dimension-$\chi$ Kraus operator $K$ would lead to a family of high-bond-dimension states not reachable by DMRG with bond dimension $\chi$. The latter case constitutes an example situation where this disclosure improves over both purely classical and purely quantum technologies.

### References

[1] Sergei Filippov, Matea Leahy, Matteo AC Rossi, and Guillermo García-Pérez. Scalable tensor-network error mitigation for near-term quantum computing. arXiv preprint arXív:2307.11740, 2023.

[2] Sergey Filippov, Boris Sokolov, Matteo AC Rossi, Joonas Malmi, Elsi-Mari Borrelli, Daniel Cavalcanti, Sabrina Maniscalco, and Guillermo García-Pérez. Matrix product channel: Variationally optimized quantum tensor network to mitigate noise and reduce errors for the variational quantum eigensolver. arXiv preprint arXiv:2212.10225, 2022.

[3] Sergey N Filippov, Sabrina Maniscalco, and Guillermo García-Pérez. Scalability of quantum error mitigation techniques: from utility to advantage. arXiv preprint arXiv:2403.13542, 2024.

[4] Laurin E Fischer, Matea Leahy, Andrew Eddins, Nathan Keenan, Davide Ferracin, Matteo AC Rossi, Youngseok Kim, Andre He, Francesca Pietracaprina, Boris Sokolov, et al. Dynamical simulations of many-body quantum chaos on a quantum computer. arXiv preprint arXiv:2411.00765, 2024.

[5] Guillermo García-Pérez, Elsi-Mari Borrelli, Matea Leahy, Joonas Malmi, Sabrina Maniscalco, Matteo AC Rossi, Boris Sokolov, and Daniel Cavalcanti. Virtual linear map algorithm for classical boost in near-term quantum computing. arXiv preprint arXiv:2207.01360, 2022.

[6] Guillermo García-Pérez, Matteo AC Rossi, Boris Sokolov, Francesco Tacchino, Panagiotis K1 Barkout-sos, Guglielmo Mazzola, Ivano Tavernelli, and Sabrina Maniscalco. Learning to measure: Adaptive informationally complete gerieralized measurements for quantum algorithms. Prx quantum, 2(4):040342, 2021.

**Claims**

1. A computer-implemented method for estimating a ground state property of a quantum system described by a Hamiltonian, wherein the method comprises determining, by a classical computer (10), a target estimator of a ground state density operator of the Hamiltonian for estimating the ground state property, wherein the classical computer (10):

   receives a representation of the Hamiltonian and measurement data obtained by applying a quantum measurement to an auxiliary quantum state of a Hilbert space associated with the Hamiltonian and resulting from a quantum processor (1);
   determines training and validation estimators of a density operator of the auxiliary quantum state by use of the measurement data;
   determines target parameter values for a linear map of a parametric family of completely positive linear maps defined on a linear operator space associated with the Hamiltonian such that a value of a cost function which is indicative of a value of a trace of a product of the Hamiltonian and an image of the training estimator under the map complies with a predetermined optimization criterion;
   calculates a validation value which is a trace of an image of the validation estimator under an auxiliary target map which is the map of the family of maps with the target parameter values, and identifies a target map as the auxiliary target map divided by a normalization factor which depends on the validation value and is such that a deviation of a trace of an image of the validation estimator under the target map from one complies with a predetermined trace criterion;
   determines the target estimator of the ground state density operator as an image of the validation estimator under the target map.

2. The method according to claim 1, wherein the classical computer (10) determines the target parameter values such that a difference between the validation value and a training value which is a trace of the image of the training estimator under the auxiliary target map fulfills a difference condition.

3. The method according to claim 1 or 2, wherein if the deviation of the validation value from one is above a predetermined validation threshold value, the classical computer (10) calculates the normalization factor as a trace of an image of the training estimator under the auxiliary target map.

4. The method according to anyone of the preceding claims, wherein if the deviation of the validation value from one is below the predetermined validation threshold value, the normalization factor is one and the classical computer (10) identifies the target map as the auxiliary target map.

5. The method according to claim 4, wherein the cost function further comprises a penalty term which is proportional to a deviation of a trace of an image of the validation estimator under the map from one and complying with the optimization criterion comprises that the deviation is below the predetermined validation threshold value

6. The method according to anyone of the preceding claims, wherein the ground state property is associated with an operator, preferably a Hermitian operator, and the method further comprises estimating the ground state property by calculating, by the classical computer (10), a trace of a product of the target estimator of the ground state density operator and the operator.

7. The method according to anyone of the preceding claims, wherein the quantum measurement is described by an informationally complete Positive Operator Valued Measure with a plurality of effects, each effect being associated with a measurement outcome, the measurement data comprises the measurement outcomes of the quantum measurement, and the classical computer (10) determines the training and validation estimators from the measurement data and a set of dual operators of the plurality of effects.

8. The method according to anyone of the preceding claims, wherein the classical computer (10) determines the target values for the parameters of the map by an iterative routine, wherein starting from an initial map of the family of maps having initial parameter values the classical computer (10) calculates the value of the cost function and determines input parameter values of an input map of the next iteration on the basis of the calculated value of the cost function and the map of the iteration until the calculated value of the cost function complies with the optimization criterion.

9. The method according to anyone of the preceding claims, wherein each map of the family of maps has a map tensor network representation comprising a plurality of parameter-dependent map tensors, the Hamiltonian representation is a Hamiltonian tensor network representation comprising a plurality of Hamiltonian tensors, wherein the training estimator of the density operator has a training tensor network representation comprising a plurality of training tensors and the validation estimator of the density operator has a validation tensor network representation comprising a plurality of validation tensors, and wherein the classical computer (10) calculates the value of the cost function and the trace value on the basis of the map tensors, the Hamiltonian tensors, the training tensors and the validation tensors in accordance with a predetermined contraction rule of physical and virtual indices of the tensor network representations.

10. The method according to anyone of the preceding claims, wherein the classical computer (10) determines the training estimator by use of a training set of measurement data selected from the measurement data and determines the validation estimator by use of a validation set of measurement data selected from the measurement data, wherein the training set and the validation set are disjoint sets.

11. The method according to anyone of the preceding claims, wherein the classical computer (10) further determines the target parameter values of the map such that a difference between a training energy value which is a trace of a product of the Hamiltonian and an image of the training estimator under the map and a validation energy value which is a trace of a product of the Hamiltonian and an image of the validation estimator under the map fulfills an energy difference criterion.

12. The method according to anyone of the preceding claims, wherein the method further comprises creating the measurement data by executing a quantum circuit by the quantum processor (1) to thereby obtain the auxiliary quantum state and by applying the quantum measurement to the auxiliary quantum state.

13. A computer program product comprising instructions, which, when the computer program product is executed by a classical computer (10) cause the classical computer (10) to carry out the method according to anyone of claims 1 - 11.

14. A data carrier having stored thereon the computer program product of claim 13.

15. A computer system (100) for estimating a ground state property of a quantum system described by a Hamiltonian, the computer system (100) comprising a quantum processor (1) and a classical computer (10), wherein the quantum processor (1) is configured to execute a quantum circuit to thereby obtain an auxiliary quantum state, to apply a quantum measurement to the auxiliary quantum state to thereby create measurement data and to provide the measurement data to the classical computer (10), and the classical computer (10) is configured to carry out the method according to anyone of claims 1 - 11.

**Fig. 1**

# Fig. 2

**S1**

Receive representation of Hamiltonian and measurement data of an auxiliary quantum state of the quantum processor

**S2**

Determine training and validation estimators of the auxiliary state, determine target parameter values of an auxiliary target map by use of a cost function and identify target map

**S3**

Determine target estimator of the ground state density operator as the image of the validation estimator under the target map

**EUROPEAN SEARCH REPORT**

Application Number

EP 25 15 5570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HSIN-YUAN HUANG ET AL: "Predicting Many Properties of a Quantum System from Very Few Measurements", ARXIV.ORG, CORNELL UNIVERSITY LIBRARY, 201 OLIN LIBRARY CORNELL UNIVERSITY ITHACA, NY 14853, 22 April 2020 (2020-04-22), XP081909109, DOI: 10.1038/S41567-020-0932-7 Retrieved from the Internet: URL:https://arxiv.org/pdf/2002.08953> * abstract; figure 1 * * page 2, paragraph 1 * * page 3, paragraph 1 - paragraph 3 * * page 4 * * page 7, paragraph 2 * * page 11, section 1.A. * * algorithm 1 * * equations (1), (S3), (S35), (S37), (S38) * | 1-15 | INV. G06N10/60 G06N10/20 |
| A | HARISH J VALLURY ET AL: "Arbitrary Ground State Observables from Quantum Computed Moments", ARXIV.ORG, CORNELL UNIVERSITY LIBRARY, 201 OLIN LIBRARY CORNELL UNIVERSITY ITHACA, NY 14853, 12 December 2023 (2023-12-12), XP091666772, DOI: 10.1109/QCE57702.2023.00040 Retrieved from the Internet: URL:https://arxiv.org/pdf/2312.06975> * the whole document * | 1-15 | TECHNICAL FIELDS SEARCHED (IPC) G06N |

The present search report has been drawn up for all claims

| Place of search | Date of completion of the search | Examiner |
|---|---|---|
| The Hague | 19 June 2025 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SERGEI FILIPPOV ; MATEA LEAHY ; MATTEO AC ROSSI ; GUILLERMO GARCÍA-PÉREZ**. Scalable tensor-network error mitigation for near-term quantum computing. *arXiv preprint arXiv:2307.11740*, 2023
- **SERGEY FILIPPOV ; BORIS SOKOLOV ; MATTEO AC ROSSI ; JOONAS MALMI ; ELSI-MARI BORRELLI ; DANIEL CAVALCANTI ; SABRINA MANISCALCO ; GUILLERMO GARCÍA-PÉREZ**. Matrix product channel: Variationally optimized quantum tensor network to mitigate noise and reduce errors for the variational quantum eigensolver. *rXiv preprint arXiv:2212.10225*, 2022
- **SERGEY N FILIPPOV ; SABRINA MANISCALCO ; GUILLERMO GARCÍA-PÉREZ**. Scalability of quantum error mitigation techniques: from utility to advantage. *rXiv preprint arXiv:2403.13542*, 2024
- **LAURIN E FISCHER ; MATEA LEAHY ; ANDREW EDDINS ; NATHAN KEENAN ; DAVIDE FERRACIN ; MATTEO AC ROSSI ; YOUNGSEOK KIM ; ANDRE HE ; FRANCESCA PIETRACAPRINA ; BORIS SOKOLOV et al.** Dynamical simulations of many-body quantum chaos on a quantum computer. *arXiv preprint arXiv:2411.00765*, 2024
- **GUILLERMO GARCÍA-PÉREZ ; ELSI-MARI BORRELLI ; MATEA LEAHY ; JOONAS MALMI ; SABRINA MANISCALCO ; MATTEO AC ROSSI ; BORIS SOKOLOV ; DANIEL CAVALCANTI**. Virtual linear map algorithm for classical boost in near-term quantum computing. *arXiv preprint arXiv:2207.01360*, 2022
- **GUILLERMO GARCÍA-PÉREZ ; MATTEO AC ROSSI ; BORIS SOKOLOV ; FRANCESCO TACCHINO ; PANAGIOTIS K1 BARKOUT-SOS ; GUGLIELMO MAZZOLA ; IVANO TAVERNELLI ; SABRINA MANISCALCO**. Learning to measure: Adaptive informationally complete gerieralized measurements for quantum algorithms. *Prx quantum*, 2021, vol. 2 (4), 040342